(19) Europäisches Patentamt
European Patent Office
Office européen des brevets

(11) **EP 4 768 332 A1**

(12) **EUROPEAN PATENT APPLICATION**
published in accordance with Art. 153(4) EPC

(43) Date of publication:
**01.07.2026 Bulletin 2026/27**

(21) Application number: **23953445.6**

(22) Date of filing: **26.09.2023**

(51) International Patent Classification (IPC):
***B60N 2/427*** *(2006.01)*

(52) Cooperative Patent Classification (CPC):
**B60N 2/427**

(86) International application number:
**PCT/CN2023/121771**

(87) International publication number:
**WO 2025/065287 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Yinwang Intelligent Technologies Co.,
Ltd.**
**Shenzhen, Guangdong 518129 (CN)**

(72) Inventors:
• **LI, Liangyu**
**Shenzhen, Guangdong 518129 (CN)**

• **CAO, Guoxiang**
**Shenzhen, Guangdong 518129 (CN)**
• **YANG, Chen**
**Shenzhen, Guangdong 518129 (CN)**
• **ZHAO, Jindong**
**Shenzhen, Guangdong 518129 (CN)**
• **CHEN, Xiaohua**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **SEAT MOVING DEVICE AND CONTROL METHOD THEREFOR, AND SEAT AND VEHICLE**

(57)     A seat moving apparatus and a control method therefor, a seat, and a vehicle are disclosed. In the seat moving apparatus, a gear mechanism (230) includes a first gear (231) and a second gear (232) that are connected in a transmission manner. A first moving apparatus (210) is connected to a base (240) and a first rack (220), and the first rack (220) is engaged with the first gear (231). A second rack (250) is connected to a seat body (10), and the second rack (250) is engaged with the second gear (232). A locking apparatus (260) is connected to both the base (240) and the seat body (10), and the locking apparatus (260) prevents the seat body (10) from moving toward a vehicle rear in a locked state. When a vehicle encounters a collision or is to encounter a collision, the seat moving apparatus increases a distance between a driver and a vehicle front, to avoid injury to the driver.

FIG. 4

# Description

## TECHNICAL FIELD

Embodiments of this application relate to the field of automobile manufacturing technologies, and specifically, to a seat moving apparatus and a control method therefor, a seat, and a vehicle.

## BACKGROUND

A seat is usually disposed in a cab of a vehicle, and the seat is connected to a vehicle body through a bolt, to fasten the seat to the vehicle body. When a collision occurs, a vehicle front of the vehicle body is prone to deforming toward the cab. This is likely to cause injury to a person on the seat.

## SUMMARY

Embodiments of this application provide a seat moving apparatus and a control method therefor, a seat, and a vehicle, to avoid injury to a driver.

According to a first aspect, an embodiment of this application provides a seat moving apparatus, including: a base, a gear mechanism, a second rack, a first moving apparatus, and a first rack connected to the first moving apparatus. The base is configured to connect to a vehicle body. The gear mechanism includes a first gear and a second gear that are connected in a transmission manner, and both the first gear and the second gear are rotatably connected to the base. The first moving apparatus is connected to the base, and the first rack is engaged with the first gear. The second rack is configured to connect to a seat body, the second rack is engaged with the second gear, and both a length direction of the first rack and a length direction of the second rack are parallel to a longitudinal direction of the vehicle body. The first moving apparatus is configured to drive the first rack to move in the length direction of the first rack, to enable the seat body to move in the longitudinal direction of the vehicle body. The gear mechanism is configured to enable a moving speed of the second rack to be greater than a moving speed of the first rack. The seat moving apparatus further includes a locking apparatus. The locking apparatus is connected to the base and the seat body, and the locking apparatus is configured to prevent the seat body from moving in a locked state.

In the foregoing arrangement, the base is connected to the vehicle body, the gear mechanism includes the first gear and the second gear that are connected in a transmission manner, both the first gear and the second gear are rotatably connected to the base, the first moving apparatus is connected to the base and the first rack, the first rack is engaged with the first gear, the second rack is connected to the seat body, the second rack is engaged with the second gear, both the length direction of the first rack and the length direction of the second rack are parallel to the longitudinal direction of the vehicle body, the first moving apparatus is configured to drive the first rack to move in the length direction of the first rack, to enable the seat body to move under driving by the second rack, the locking apparatus is connected to both the base and the seat body, and the locking apparatus prevents the seat body from moving in the locked state. When a vehicle encounters a collision or is to encounter a collision, the first moving apparatus drives the first rack to move, so that the gear mechanism drives the second rack and the seat body to move, to increase a distance between a driver and a vehicle front, to prevent the collision from causing the vehicle front to be deformed toward a cab and get in contact with the driver, and avoid injury to the driver.

In addition, the gear mechanism may enable the moving speed of the second rack to be greater than the moving speed of the first rack. When the first moving apparatus drives the first rack to move, the second rack may drive, under speed increase effect of the gear mechanism, the seat body to quickly move, to prevent the vehicle front from being deformed toward the cab and causing injury to the driver, and improve safety of the vehicle.

In some embodiments that may include the foregoing embodiment, a quantity of teeth of the first gear is less than a quantity of teeth of the second gear. In this way, the moving speed of the second rack is greater than the moving speed of the first rack, and the seat can quickly move under driving by the first moving apparatus. In addition, a small quantity of teeth is conducive to a design of a larger gear modulus, to increase gear strength. In this arrangement, a structure is simple and is conducive to manufacturing.

In some embodiments that may include the foregoing embodiments, the first gear and the second gear have equal angular velocities. In this arrangement, a linear velocity of the second gear may be greater than a linear velocity of the first gear, to achieve a speed increase of the gear mechanism.

In some embodiments that may include the foregoing embodiments, the first gear and the second gear are of an integrated structure. To be specific, the first gear and the second gear are coaxially disposed and are of an integrated structure. In this arrangement, the integrated structure is formed through casting or forging. This simplifies a structure of a moving apparatus and reduces difficulty in manufacturing and assembly.

In some embodiments that may include the foregoing embodiments, a mount bracket may be disposed on the base, shaft holes are provided on the first gear and the second gear, a rotating shaft passes through the shaft holes, and the rotating shaft is connected to the mount bracket, to implement rotatable connections between the first gear and the base and between the second gear and the base. It can be understood that a bearing may be disposed between the rotating shaft and the shaft holes, to reduce rotation resistance of the first gear and the second gear.

In some embodiments that may include the foregoing embodiments, the first moving apparatus includes a first electromagnet, and an iron core of the first electromagnet is configured to attract the first rack. The first electromagnet is used to drive the first rack to move. In this way, when a collision occurs or a collision is to occur, the first rack can be driven to quickly move, and the second rack and the seat can be driven, under the action of acceleration of the gear mechanism, to quickly move, to avoid injury to the driver. In addition, the electromagnet has a large instantaneous pulling force on the first rack. This can avoid an excessively large size of the first moving apparatus while ensuring a sufficient pulling force.

In some embodiments that may include the foregoing embodiments, the first moving apparatus may alternatively include a moving motor. A drive gear is disposed on a spindle of the moving motor, and the drive gear is engaged with the first rack. When a collision occurs or a collision is to occur, the moving motor drives, through the drive gear, the first rack to move, and drives, under the action of acceleration of the gear mechanism, the second rack and the seat to quickly move, to avoid injury to the driver.

In some embodiments that may include the foregoing embodiments, the base includes a guide rail. The guide rail is parallel to the longitudinal direction of the vehicle body. The guide rail is configured to match the locking apparatus to prevent the seat body from moving in the locked state. In this arrangement, a structure is simple and is conducive to manufacturing. For example, a slide slot may be provided at the bottom of a seat cushion, and the guide rail may be slidably disposed in the slide slot. Through matching between the guide rail and the slide slot, stability of the seat can be improved, to avoid shaking of the seat.

In some embodiments that may include the foregoing embodiments, a locking slot is provided on the guide rail. The locking slot includes a first slot wall and a second slot wall that are arranged in the longitudinal direction of the vehicle body. The second slot wall is farther away from a vehicle rear than the first slot wall in the longitudinal direction of the vehicle body. The locking apparatus includes: a pedestal, a locking rod, a first elastic member, and a position limiting apparatus. The pedestal is configured to connect to the seat body. The locking rod is slidably connected to the pedestal, and a locking block is disposed at an end of the locking rod. The first elastic member is connected to both the pedestal and the locking block. The first elastic member is configured to enable the locking block to move toward the locking slot, to enable the locking block to get in contact with the first slot wall. A tilt angle of the first slot wall is less than a friction angle of a contact surface between the locking block and the first slot wall. The position limiting apparatus is disposed on the pedestal, and the position limiting apparatus is configured to connect to the locking rod in the locked state, to prevent the locking rod from sliding relative to the pedestal.

In the foregoing arrangement, the tilt angle of the first slot wall is less than the friction angle of the contact surface between the locking block and the first slot wall, to avoid latching between the locking block and the first slot wall. In this way, when the first moving apparatus drives the seat body to move, sliding may occur between the first slot wall and the locking block, to enable the locking block to slide out of the locking slot.

In some embodiments that may include the foregoing embodiments, the locking block includes a first surface and a second surface. In the locked state, the first surface is in contact with the first slot wall, and the second surface is in contact with the second slot wall. A tilt angle of the second slot wall is greater than a friction angle of a contact surface between the second surface and the second slot wall. In this arrangement, latching may occur between the locking block and the second slot wall, and the locking apparatus may prevent the seat from moving in either an unlocked state or the locked state.

In some embodiments that may include the foregoing embodiments, there are a plurality of locking slots, and the plurality of locking slots are arranged in the longitudinal direction of the vehicle body. For example, the plurality of locking slots may be sequentially arranged in the longitudinal direction of the vehicle body, and the top of a first slot wall of a previous locking slot may be in contact with the top of a second slot wall of a next locking slot. Certainly, the plurality of locking slots may alternatively be arranged at spacings in the longitudinal direction of the vehicle body. This is not limited in this embodiment of this application. In this arrangement, in the locked state, the locking block may be located in different locking slots, to further adjust a distance between the seat and the vehicle front, to increase an adjustment range of the distance between the seat and the vehicle front.

In some embodiments that may include the foregoing embodiments, the position limiting apparatus includes a position limiting block, a second elastic member, and a second moving apparatus. The second elastic member is connected to the position limiting block and the pedestal, and the second elastic member is configured to drive the position limiting block to move toward the locking rod, to enable the position limiting block to be clamped into a position limiting slot on the locking rod in the locked state. The second moving apparatus is disposed on the pedestal. The second moving apparatus is connected to the position limiting block, and the second moving apparatus is configured to: when the locked state is released, drive the position limiting block to move in a direction away from the locking rod.

In the foregoing arrangement, in the locked state, the second elastic member may enable the position limiting block to remain in the position limiting slot, to prevent the locking rod from moving, and implement locking. During unlocking, the second moving apparatus drives the position limiting block to move in a direction away from the locking rod, so that the position limiting block slides out of the position limiting slot, to release the locking rod and implement unlocking. This can increase an unlocking speed, so that the seat can quickly move, to further improve safety of the vehicle.

In some embodiments that may include the foregoing embodiments, the position limiting apparatus further includes a positioning boss. The positioning boss abuts against a side, away from the locking block, of the position limiting block, and the positioning boss is slidably connected to the position limiting block. In the locked state, the second elastic member drives the position limiting block to be clamped into the position limiting slot. In this case, the positioning boss prevents, through the position limiting block, the locking rod from sliding relative to the pedestal.

In some embodiments that may include the foregoing embodiments, the second moving apparatus may include a second electromagnet. The second electromagnet is disposed on the pedestal, and an iron core of the second electromagnet is configured to attract the position limiting block, to drive the position limiting block to move in a direction away from the locking rod when the second electromagnet is energized. Certainly, the second moving apparatus may alternatively include an electric push rod. The electric push rod is disposed on the pedestal, and a push rod of the electric push rod is connected to the position limiting block. During unlocking, the electric push rod drives the position limiting block to move in a direction away from the locking rod.

In some embodiments that may include the foregoing embodiments, the second elastic member may include a second spiral spring. One end of the second spiral spring is connected to the pedestal, and the other end of the second spiral spring is connected to the position limiting block. The second spiral spring is in a compressed state. In another implementation, the second elastic member may alternatively include a second elastic sheet. One end of the second elastic sheet is connected to the pedestal, and the other end of the second elastic sheet may be connected to the position limiting block. An elastic force of the second elastic sheet may drive the position limiting block to move toward the locking rod, and keep the position limiting block in the position limiting slot.

In some embodiments that may include the foregoing embodiments, the position limiting apparatus includes a position limiting block, a second elastic member, and a second moving apparatus. The second elastic member is connected to the position limiting block and the pedestal, and the elastic member is configured to drive the position limiting block to move in a direction away from the locking rod. The second moving apparatus is connected to the position limiting block, and the second moving apparatus is configured to: in the locked state, drive the position limiting block to move toward the locking rod, to enable the position limiting block to be clamped into a position limiting slot on the locking rod in the locked state.

In the foregoing arrangement, in the locked state, the second moving apparatus drives the position limiting block to move toward the locking rod, to enable the position limiting block to remain in the position limiting slot, and prevent the locking rod from moving. A driving force for driving the position limiting block to move toward the locking rod is large, to avoid mis-unlocking caused by detachment of the position limiting block from the position limiting slot. Correspondingly, in the unlocked state, the second moving apparatus may release the driving force for the position limiting block. At the same time, the second elastic member drives, through its own elastic force, the position limiting block to move in a direction away from the locking rod, and the position limiting block slides out of the position limiting slot, to release the locking rod and implement unlocking.

In some embodiments that may include the foregoing embodiments, the second moving apparatus may include a second electromagnet. The second electromagnet is disposed on the pedestal, and an iron core of the second electromagnet is configured to attract the position limiting block, to drive the position limiting block to move toward the locking rod when the second electromagnet is energized, to implement locking. Certainly, the second moving apparatus may alternatively include an electric push rod. The electric push rod is disposed on the pedestal, and a push rod of the electric push rod is connected to the position limiting block. During locking, the electric push rod drives the position limiting block to move toward the locking rod. In this embodiment of this application, the second moving apparatus is not limited, provided that the position limiting block can be driven to move toward the locking rod during locking and then the position limiting block is enabled to remain in the position limiting slot. It can be understood that, in the locked state, the second moving apparatus may remain energized; and during unlocking, the second moving apparatus is not energized, the position limiting block is driven, under the action of the elastic force of the second elastic member, to move in a direction away from the locking rod, and the position limiting block slides out of the position limiting slot, to release the locking rod.

In some embodiments that may include the foregoing embodiments, the second elastic member may include a second spiral spring. One end of the second spiral spring is connected to the pedestal, and the other end of the second spiral spring may be connected to the position limiting block. In the locked state, the second spiral spring is in a stretched state. In another implementation, the second elastic member may alternatively include a second elastic sheet. One end of the second elastic sheet is connected to the pedestal, and the other end of the second elastic sheet may be connected to the position limiting block. An elastic force of the second elastic sheet may drive the position limiting block to move in a direction away from the locking rod.

In some embodiments that may include the foregoing embodiments, the locking slot is provided on a preset surface of the guide rail, and a first stop part is disposed on the preset surface. The first stop part is located on a side, facing the vehicle rear, of the locking slot. The first stop part is configured to prevent the locking block from moving toward the vehicle rear. In this arrangement, the seat may be prevented from moving by an excessively long distance, to avoid separation of the seat from the guide rail.

In some embodiments that may include the foregoing embodiments, in an implementation in which the locking slot is provided on a top surface of the guide rail, the preset surface is the top surface of the guide rail. The first stop part may include a protrusion located on the top surface. There is a specific distance between the protrusion and the top surface, to ensure that after the locking block gets in contact with the first stop part, it is difficult for the locking block to cross the first stop part even if the locking block moves to a limiting position in a direction away from the guide rail.

According to a second aspect, an embodiment of this application further provides a control method for a seat moving apparatus, applied to the foregoing seat moving apparatus. The control method for a seat moving apparatus includes:

    obtaining travel data of a vehicle;
    analyzing the travel data to form a collision determining result; and
    when the collision determining result is yes, controlling a locking apparatus to unlock a seat body, and controlling a first moving apparatus to drive a first rack to move.

In the control method for a seat moving apparatus provided in this embodiment of this application, the travel data is analyzed to form the collision determining result; and when the collision determining result is yes, the locking apparatus is controlled to unlock the seat body, and the first moving apparatus is controlled to drive the first rack to move. To be specific, when the vehicle encounters a collision or is to encounter a collision, the first moving apparatus drives the first rack to move, so that a gear mechanism drives a second rack and the seat body to move, to increase a distance between a driver and a vehicle front, to prevent the collision from causing the vehicle front to be deformed toward a cab and get in contact with the driver, and avoid injury to the driver.

In some embodiments that may include the foregoing embodiment, analyzing the travel data to obtain the collision determining result includes: obtaining time-to-collision of the vehicle, an operating status of an autonomous emergency braking system, and a vehicle deceleration based on the travel data; and when the time-to-collision is less than a specified value, the autonomous emergency braking system is operating, and the vehicle deceleration reaches an upper limit value, the collision determining result is yes. In the foregoing arrangement, whether the vehicle is to encounter a collision is comprehensively determined based on the time-to-collision, an emergency braking status, and the vehicle deceleration, to improve accuracy of determining and improve safety of the vehicle.

In some embodiments that may include the foregoing embodiments, obtaining the travel data of the vehicle includes: a current vehicle speed, the vehicle deceleration, an opening degree of a brake pedal, and a vehicle distance. The travel data is obtained by an existing detection device, for example, a sensor, a radar, or a camera, of the vehicle, and no additional detection device needs to be disposed to detect the travel data. This simplifies a structure of the vehicle and also reduces manufacturing costs of the vehicle.

In some embodiments that may include the foregoing embodiments, the control method for a seat moving apparatus further includes: receiving an airbag trigger signal, and when the airbag trigger signal is obtained, controlling the locking apparatus to unlock the seat body, and controlling the first moving apparatus to drive the first rack to move. In the foregoing arrangement, when an airbag expands, a vehicle-mounted computer controls the locking apparatus to unlock the seat body, and controls the first moving apparatus to drive the seat body to move, to avoid injury to the driver and further improve safety of the vehicle.

According to a third aspect, an embodiment of this application further provides a seat, including a seat body and the foregoing seat moving apparatus, where the seat body is connected to the seat moving apparatus.

The seat provided in this embodiment of this application includes the seat moving apparatus in any one of the foregoing embodiments. Therefore, the seat and the seat moving apparatus can resolve a same technical problem and achieve same technical effect.

In some embodiments that may include the foregoing embodiment, the seat body includes a seat cushion and a seat back connected to the seat cushion, and the seat moving apparatus is connected to the seat cushion. The seat further includes a regulation apparatus. The regulation apparatus is connected to a base and a vehicle body. The regulation apparatus is configured to drive the seat cushion to move in a longitudinal direction of the vehicle body. When a vehicle encounters a collision or is to encounter a collision, a first moving apparatus drives a first rack to move, and a second rack drives the seat to move. When the vehicle is in a traveling or stopped state, the regulation apparatus may drive, through the seat moving apparatus, the seat to move in the longitudinal direction of the vehicle body, to adjust a distance between the seat and a vehicle front.

In another implementation, the second rack is connected to the seat cushion through the regulation apparatus, and the regulation apparatus is configured to drive the seat cushion to move in the longitudinal direction of the vehicle body. When the vehicle encounters a collision or is to encounter a collision, the first moving apparatus drives the first rack to move, and the second rack drives, through the regulation apparatus, the seat to move. When the vehicle is in the traveling or stopped state, a driver may adjust the distance between the seat and the vehicle front by using the regulation apparatus, to improve riding comfort.

According to a fourth aspect, an embodiment of this application further provides a vehicle, including a vehicle body and the foregoing seat, where the seat is disposed on the vehicle body.

The vehicle provided in this embodiment of this application includes the seat moving apparatus in any one of the foregoing embodiments. Therefore, the vehicle and the seat moving apparatus can resolve a same technical problem and achieve same technical effect.

## BRIEF DESCRIPTION OF DRAWINGS

FIG. 1 is a diagram of a structure of a vehicle according to an embodiment of this application;
FIG. 2 is a first diagram of a structure of a seat according to an embodiment of this application;
FIG. 3 is a second diagram of a structure of a seat according to an embodiment of this application;
FIG. 4 is an exploded view of a seat according to an embodiment of this application;
FIG. 5 is a first diagram of a structure of a seat moving apparatus according to an embodiment of this application;
FIG. 6 is a second diagram of a structure of a seat moving apparatus according to an embodiment of this application;
FIG. 7 is a third diagram of a structure of a seat according to an embodiment of this application;
FIG. 8 is a fourth diagram of a structure of a seat according to an embodiment of this application;
FIG. 9 is a diagram of a structure of a locking apparatus in a seat moving apparatus according to an embodiment of this application;
FIG. 10 is a third diagram of a structure of a seat moving apparatus according to an embodiment of this application;
FIG. 11 is a cross-sectional view of a locking apparatus in a seat moving apparatus according to an embodiment of this application;
FIG. 12 is a flowchart of a control method for a seat moving apparatus according to an embodiment of this application; and
FIG. 13 is a logical block diagram of a control method for a seat moving apparatus according to an embodiment of this application.

Reference numerals:

1: vehicle body; 2: vehicle front; 3: vehicle rear; 4: seat; 10: seat body; 20: seat moving apparatus; 30:

regulation apparatus; 40: lifting apparatus; 100: vehicle; 101: seat back; 102: seat cushion; 103: headrest; 104: slide slot; 105: accommodation slot; 210: first moving apparatus; 220: first rack; 230: gear mechanism; 231: first gear; 232: second gear; 240: base; 241: guide rail; 242: locking slot; 243: first slot wall; 244: second slot wall; 245: stop part; 246: mount bracket; 247: connecting panel; 248: roller; 250: second rack; 260: locking apparatus; 261: pedestal; 262: locking rod; 2621: locking block; 2622: first surface; 2623: second surface; 2624: position limiting slot; 263: first elastic member; 264: position limiting apparatus; 2642: second elastic member; 2643: second moving apparatus; 2644: position limiting block; 2645: positioning boss.

## DESCRIPTION OF EMBODIMENTS

The following describes technical solutions in embodiments of this application with reference to accompanying drawings in embodiments of this application. Clearly, the described embodiments are merely some but not all of embodiments of this application.

The terms "first", "second", and the like mentioned below are merely intended for description, and shall not be understood as an indication or implication of relative importance or an implicit indication of a quantity of indicated technical features. Therefore, a feature defined by "first", "second", or the like may explicitly or implicitly include one or more features.

In addition, in embodiments of this application, orientation terms such as "above", "below", "left", "right", "horizontal", and "vertical" are defined relative to placement orientations of components shown in the accompanying drawings. It should be understood that these directional terms are relative concepts that are used for relative description and clarification, and may vary correspondingly based on changes in the placement orientations of the components in the accompanying drawings.

In embodiments of this application, unless otherwise clearly specified and limited, the term "connection" should be understood in a broad sense. For example, the "connection" may be a fixed connection, an electrical connection, a detachable connection, or an integrated connection, or may be a direct connection or an indirect connection through an intermediate medium.

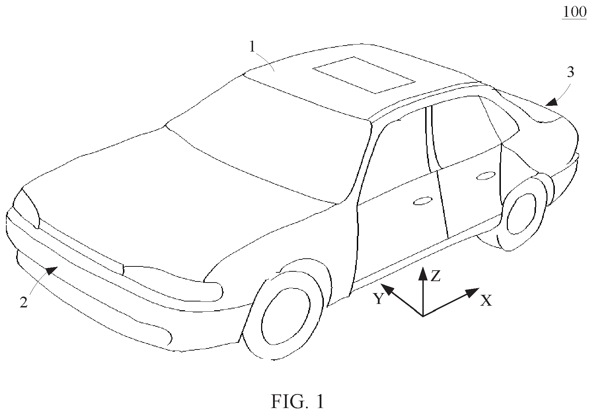

Refer to FIG. 1. An embodiment of this application provides a vehicle 100. The vehicle 100 may be a commercial vehicle or a passenger vehicle. The vehicle 100 includes a vehicle body 1, and a power system and a wheel that are disposed on the vehicle body 1. The power system is connected to the wheel in a transmission manner, and the power system is configured to drive the wheel to rotate, to provide power for traveling of the vehicle 100.

In some embodiments, the power system may include a battery and a motor. The motor is electrically connected to the battery, and the motor is connected to the wheel in a transmission manner. During traveling, the battery supplies power to the motor, so that the motor drives the wheel to rotate. Correspondingly, the vehicle 100 is an electric vehicle.

In another embodiment, the power system may include an internal combustion engine and a gearbox. The gearbox is connected to both the internal combustion engine and the wheel in a transmission manner, and the internal combustion engine may drive, through the gearbox, the wheel to rotate. Correspondingly, the vehicle 100 may be a fuel vehicle. It can be understood that the power system is not limited in this embodiment of this application.

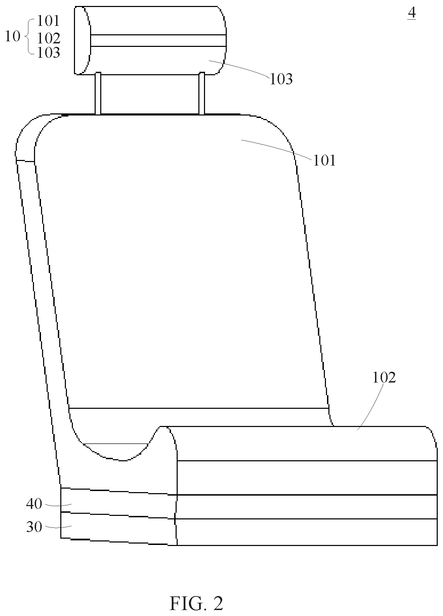

Refer to FIG. 1 and FIG. 2. In this embodiment of this application, the vehicle body 1 encloses a cab, and a driver and a co-driver are located in the cab. The vehicle 100 in this embodiment of this application further includes a seat 4. The seat 4 is disposed in the cab, and the seat 4 is connected to the vehicle body 1. For example, the seat 4 may include a driver seat for the driver to take. Certainly, the seat 4 may alternatively include a co-driver seat for the co-driver to take. For ease of description, an example in which the seat 4 is the driver seat is used below for description. It can be understood that the seat 4 may alternatively be the co-driver seat or another seat. This is not limited in this embodiment of this application.

In some embodiments, the seat 4 may include a seat body 10, and the seat body 10 includes a seat cushion 102 and a seat back 101. The seat cushion 102 is approximately parallel to a horizontal plane, and there is a specific included angle between the seat back 101 and the horizontal plane. The seat back 101 and the seat cushion 102 are disposed in a longitudinal direction of the vehicle body 1, and the seat back 101 is located at an end, close to a vehicle rear 3, of the seat cushion 102. The driver may sit on the seat cushion 102, and the driver may lean against the seat back 101. It can be understood that, in this embodiment of this application, the longitudinal direction of the vehicle body 1 may be a traveling direction (for example, a direction parallel to an X direction in FIG. 1) of the vehicle 100. The vehicle rear 3 and a vehicle front 2 are two ends of the vehicle body 1 that are disposed opposite to each other in the longitudinal direction. The vehicle front 2 is a front end of the vehicle body 1 when the vehicle moves forward, and the vehicle rear 3 is a rear end of the vehicle body 1 when the vehicle moves forward.

As shown in FIG. 2, the seat body 10 may further include a headrest 103. The headrest 103 is disposed at the top of the seat back 101, and the headrest 103 is connected to the seat back 101. When the driver sits on the seat 4, the head of the driver may lean against the headrest 103, to improve riding comfort of the driver.

In some embodiments, the seat 4 further includes an adjustment apparatus (not shown). The seat back 101 is hinged to the seat cushion 102. The adjustment apparatus is connected to the seat back 101 and the seat cushion 102. The adjustment apparatus is configured to drive the seat back 101 to rotate relative to the seat cushion 102, to adjust an angle between the seat back 101 and the seat cushion 102, to improve riding comfort of the driver. For example, the adjustment apparatus may include a worm wheel, a worm, and a first adjustment motor. The worm wheel is connected to the seat back 101, the worm is connected to a spindle of the first adjustment motor in a transmission manner, and the worm matches the worm wheel. During use, the first adjustment motor may drive the worm to rotate, so that the worm wheel is driven to rotate, to drive the seat back 101 to rotate relative to the seat cushion 102. Certainly, in another implementation, the adjustment apparatus may alternatively include a first adjustment gear, a second adjustment gear, and a second adjustment motor. The first adjustment gear is connected to the seat back 101, the second adjustment gear is connected to a spindle of the second adjustment motor in a transmission manner, and the second adjustment gear is engaged with the first adjustment gear. During use, the second adjustment motor drives the first adjustment gear to rotate, so that the second adjustment gear drives the seat back 101 to rotate relative to the seat cushion 102.

Still refer to FIG. 1 and FIG. 2. In some embodiments, the seat 4 further includes a regulation apparatus 30. The regulation apparatus 30 is connected to the seat cushion 102 and the vehicle body 1, to fasten the seat 4 to the vehicle body 1. In addition, the regulation apparatus 30 may drive the seat 4 to move in the longitudinal direction of the vehicle body 1, to adjust a size of space between the seat 4 and the vehicle front 2, to further improve riding comfort of the driver. For example, the regulation apparatus 30 may include a slide rail, a slide block, a first screw rod, a first nut, and a first regulation motor. The slide rail may be connected to the vehicle body 1, the slide block is slidably disposed in the slide rail, and the slide rail allows the slide block to slide only in the longitudinal direction of the vehicle body 1. Both the slide block and the first nut may be connected to the seat cushion 102. The first screw rod matches the first nut, and a spindle of the first regulation motor is connected to the first screw rod in a transmission manner. During use, the first regulation motor drives the first screw rod to rotate, so that the first nut drives the seat 4 to move in the longitudinal direction of the vehicle body 1.

In the foregoing implementation, the seat 4 may further include a lifting apparatus 40. The lifting apparatus 40 is connected to the seat cushion 102 and the vehicle body 1. The lifting apparatus 40 may drive the seat 4 to move in a vertical direction, to adjust a height of the seat 4. For example, the lifting apparatus 40 may include a first rod body, a second rod body, a second screw rod, a second nut, and a lifting motor. Both the top of the first rod body and the top of the second rod body are slidably connected to the seat cushion 102. Both the bottom of the first rod body and the bottom of the second rod body are slidably connected to the vehicle body 1. The second nut may be connected to the first rod body.

The second screw rod is rotatably connected to the second rod body. The second screw rod matches the second nut. A spindle of the lifting motor is connected to the second screw rod in a transmission manner. During adjustment, the lifting motor drives the second screw rod to rotate, so that the second nut drives the first rod body and the second rod body to rotate relative to each other, to adjust the height of the seat 4.

In an implementation in which the seat 4 includes the regulation apparatus 30, the lifting apparatus 40 may be disposed between the regulation apparatus 30 and the seat cushion 102. For example, both the bottom of the first rod body and the bottom of the second rod body may be slidably connected to the slide block, and both the top of the first rod body and the top of the second rod body are slidably connected to the seat cushion 102. During operation of the first regulation motor, the seat 4 and the lifting apparatus 40 are driven to move in the longitudinal direction of the vehicle body 1.

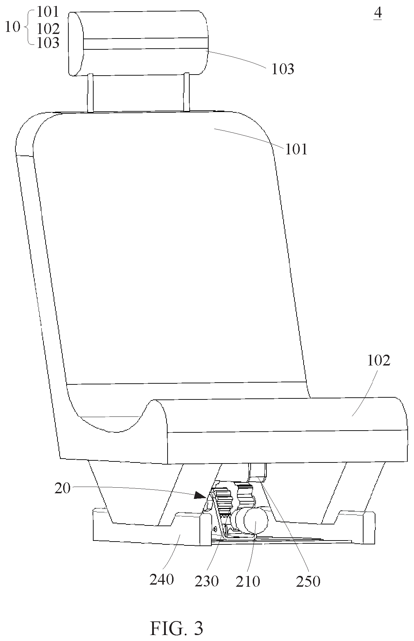

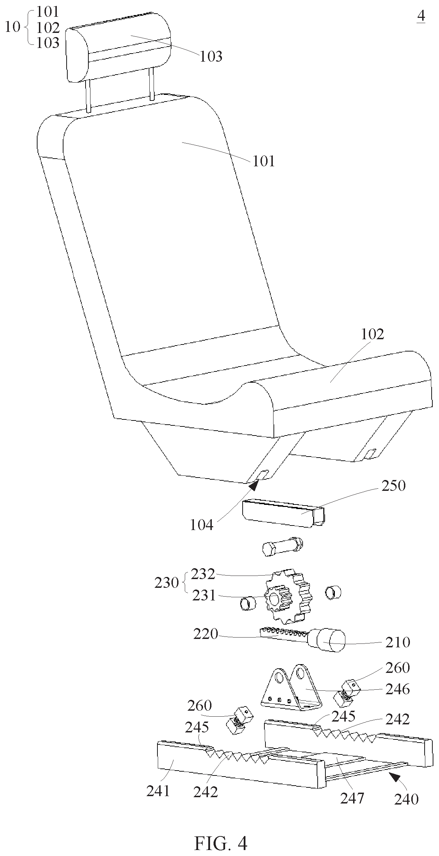

Refer to FIG. 3 and FIG. 4. In this embodiment of this application, the seat 4 further includes a seat moving apparatus 20. The seat moving apparatus 20 may include a base 240, a gear mechanism 230, a first rack 220, and a first moving apparatus 210. The gear mechanism 230 is disposed on the base 240. The gear mechanism 230 may include a first gear 231 and a second gear 232 that are connected in a transmission manner, and both the first gear 231 and the second gear 232 are rotatably connected to the base 240, in other words, both the first gear 231 and the second gear 232 may rotate relative to the base 240. The first rack 220 is engaged with the first gear 231, and a length direction of the first rack 220 is parallel to the longitudinal direction of the vehicle body 1 shown in FIG. 1. The length direction of the first rack 220 is parallel to an arrangement direction of a plurality of teeth on the first rack 220. The first moving apparatus 210 is connected to the first rack 220, and the first moving apparatus 210 is configured to drive the first rack 220 to move in a length direction of the vehicle body 1, to drive the first gear 231 and the second gear 232 to rotate.

In this embodiment of this application, the seat moving apparatus 20 further includes a second rack 250. The second rack 250 is connected to the seat body 10. A length direction of the second rack 250 is parallel to the longitudinal direction of the vehicle body 1. The length direction of the second rack 250 is parallel to an arrangement direction of a plurality of teeth on the second rack 250. The second rack 250 is engaged with the second gear 232. When the first moving apparatus 210 drives the first rack 220 to move in the longitudinal direction of the vehicle body 1, the first gear 231 and the second gear 232 are driven to rotate, so that the second rack 250 drives the seat body 10 to move in the longitudinal direction of the vehicle body 1. For example, the second rack 250 is connected to the seat body 10. In an implementation in which the seat body 10 includes the seat cushion 102 and the seat back 101, the second rack 250 may be connected to the seat cushion 102.

In the foregoing implementation, the gear mechanism 230 may enable a moving speed of the second rack 250 to be greater than a moving speed of the first rack 220. In this way, when the first moving apparatus 210 drives the first rack 220 to move in the length direction of the vehicle body 1, the second rack 250 can drive the seat body 10 to quickly move in the length direction of the vehicle body 1.

In some embodiments, an angular velocity of the first gear 231 may be different from an angular velocity of the second gear 232. For example, the angular velocity of the second gear 232 may be greater than the angular velocity of the first gear 231. Correspondingly, the gear mechanism 230 may further include a first intermediate gear and a second intermediate gear (not shown). The first intermediate gear and the first gear 231 are coaxially disposed, and the first intermediate gear and the first gear 231 are of an integrated structure. The second intermediate gear and the second gear 232 are coaxially disposed, and the second intermediate gear and the second gear 232 are of an integrated structure. The second intermediate gear is engaged with the first intermediate gear, and a quantity of teeth of the second intermediate gear is less than a quantity of teeth of the first intermediate gear, so that the angular velocity of the second gear 232 is greater than the angular velocity of the first gear 231, and the moving speed of the second rack 250 is greater than the moving speed of the first rack 220. It can be understood that, in the foregoing implementation, a quantity of teeth of the first gear 231 may be equal to or not equal to a quantity of teeth of the second gear 232, provided that it is ensured that the moving speed of the second rack 250 is greater than the moving speed of the first rack 220.

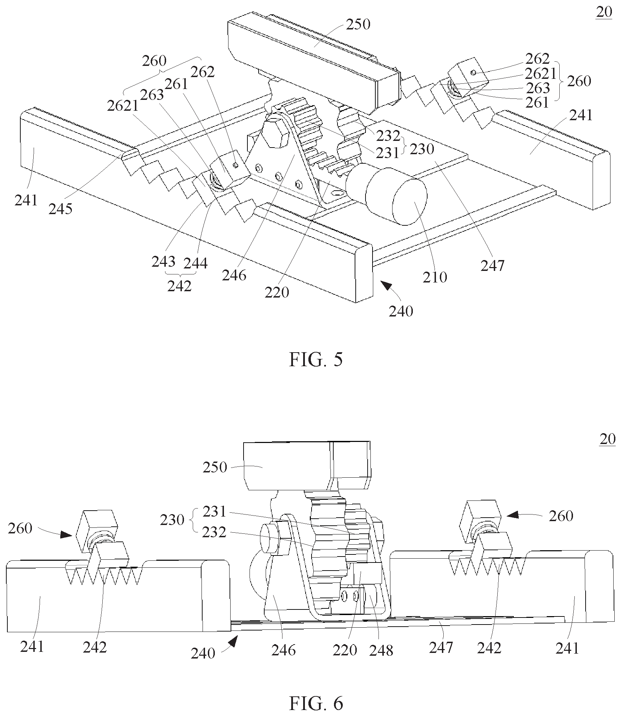

Refer to FIG. 5. In some embodiments, the quantity of teeth of the first gear 231 may be less than the quantity of teeth of the second gear 232, so that the moving speed of the second rack 250 is greater than the moving speed of the first rack 220, and the seat 4 shown in FIG. 4 can quickly move under driving by the first moving apparatus 210. In addition, a small quantity of teeth is conducive to a design a larger gear modulus, to increase gear strength. In this arrangement, a structure is simple and is conducive to manufacturing.

In the foregoing implementation, the angular velocity of the first gear 231 may be equal to the angular velocity of the second gear 232. In this arrangement, a linear velocity of the second gear 232 may be greater than a linear velocity of the first gear 231, to achieve a speed increase of the gear mechanism.

Still refer to FIG. 4 and FIG. 5. In the foregoing implementation, the first gear 231 and the second gear 232 may be of an integrated structure. To be specific, the first gear 231 and the second gear 232 are coaxially disposed and are of an integrated structure. In this arrangement, the integrated structure is formed through casting or forging. This simplifies a structure of a moving apparatus and reduces difficulty in manufacturing and assembly. For example, a mount bracket 246 may be disposed on the base 240, shaft holes are provided on the first gear 231 and the second gear 232, a rotating shaft passes through the shaft holes, and the rotating shaft is connected to the mount bracket 246, to implement rotatable connections between the first gear 231 and the base 240 and between the second gear 232 and the base 240. It can be understood that a bearing may be disposed between the rotating shaft and the shaft holes, to reduce rotation resistance of the first gear 231 and the second gear 232.

In another implementation, the gear mechanism 230 may alternatively include a transmission shaft, a first key slot and a second key slot are arranged on a side wall of the transmission shaft at a spacing in an axial direction, a first shaft hole is provided on the first gear 231, a third key slot is provided on a side wall of the first shaft hole, a second shaft hole is provided on the second gear 232, a fourth key slot is provided on a side wall of the second shaft hole, the transmission shaft passes through the first shaft hole and the second shaft hole, a first flat key is disposed in the first key slot and the third key slot, and a second flat key is disposed in the second key slot and the fourth key slot. To be specific, the first gear 231 is connected to the transmission shaft through the first flat key, and the second gear 232 is connected to the transmission shaft through the second flat key, to implement a transmission connection between the second gear 232 and the second gear 232. For example, a mount bracket 246 is disposed on the base 240, and the transmission shaft may be rotatably connected to the mount bracket 246 through a bearing.

Refer to FIG. 6. In some embodiments, a plurality of rollers 248 are rotatably disposed on the mount bracket 246, the plurality of rollers 248 are disposed at spacings in the longitudinal direction of the vehicle body 1 shown in FIG. 1, and the first rack 220 may be disposed on the plurality of rollers 248. To be specific, the plurality of rollers 248 are configured to support the first rack 220, to enable the first rack 220 to remain engaged with the first gear 231. Because the roller 248 is rotatably connected to the mount bracket 246, the roller 248 rotates when the first rack 220 moves, to reduce resistance of the first rack 220 during movement.

Still refer to FIG. 4 and FIG. 5. In this embodiment of this application, the seat moving apparatus 20 further includes a locking apparatus 260. The locking apparatus 260 is connected to the seat body 10 and the base 240. In a locked state, the locking apparatus 260 prevents the seat body 10 from moving toward the vehicle rear 3 shown in FIG. 1. When the vehicle 100 travels normally, the locking apparatus 260 may prevent the seat body 10 from moving relative to the base 240 in the longitudinal direction of the vehicle body 1. When the vehicle 100 encounters a collision or is to encounter a collision, the locking apparatus 260 may unlock the seat body 10. Correspondingly, the first moving apparatus 210 may drive the first rack 220 to move, to drive the first gear 231 and the second gear 232 to rotate, so that the second rack 250 drives the seat body 10 to move toward the vehicle rear 3, to increase a distance between the driver and the vehicle front 2, and prevent the vehicle front 2 from being deformed toward the cab and causing injury to the driver.

It can be understood that a proper arrangement of the gear mechanism 230 and a direction of a pulling force of the first moving apparatus 210 for the first rack 220 can ensure that the second rack 250 can drive the seat 4 to move toward the vehicle rear 3 when the first moving apparatus 210 pulls the first rack 220. In an implementation in which the first gear 231 and the second gear 232 are of an integrated structure, a pulling force applied by the first moving apparatus 210 to the first rack 220 faces the vehicle front 2, to be specific, the first moving apparatus 210 drives the first rack 220 to move toward the vehicle front 2, so that the first gear 231 and the second gear 232 drive the second rack 250 to move toward the vehicle rear 3.

For example, the first moving apparatus 210 may include a first electromagnet. The first electromagnet may be disposed on the base 240, and an iron core of the first electromagnet is configured to attract the first rack 220, to provide a pulling force for driving the first rack 220 to move. The first electromagnet is used to drive the first rack 220 to move. In this way, when a collision occurs or a collision is to occur, the first rack 220 can be driven to quickly move, and the second rack 250 and the seat 4 can be driven, under the action of acceleration of the gear mechanism 230, to quickly move toward the vehicle rear 3, to avoid injury to the driver. In addition, the electromagnet has a large instantaneous pulling force. This can avoid an excessively large size of the first moving apparatus 210 while ensuring a sufficient pulling force.

It can be understood that, when the first electromagnet is energized, a large magnetic field is generated at the iron core, to generate a magnetic force for attracting the first rack 220, and provide a pulling force for movement of the first rack 220. A material of the first rack 220 may include a ferromagnetic material such as a magnet, iron, or nickel, so that the first rack 220 can be attracted when the first electromagnet generates a magnetic field.

Certainly, in another implementation, the first moving apparatus 210 may alternatively include a moving motor. A drive gear is disposed on a spindle of the moving motor, and the drive gear is engaged with the first rack 220. When a collision occurs or a collision is to occur, the moving motor drives, through the drive gear, the first rack 220 to move, and drives, under the action of acceleration of the gear mechanism 230, the second rack 250 and the seat 4 to quickly move toward the vehicle rear 3, to avoid injury to the driver. The first moving apparatus 210 is not limited in this embodiment of this application, provided that the first rack 220 can be driven to move when a collision occurs or a collision is to occur, to enable the seat 4 to quickly move toward the vehicle rear 3.

Still refer to FIG. 4 and FIG. 5. In the seat moving apparatus 20 provided in this embodiment of this application, the base 240 is connected to the vehicle body 1 shown in FIG. 1, the gear mechanism 230 includes the first gear 231 and the second gear 232 that are connected in a transmission manner, both the first gear 231 and the second gear 232 are rotatably connected to the base 240, the first moving apparatus 210 is connected to the base 240 and the first rack 220, the first rack 220 is engaged with the first gear 231, the second rack 250 is connected to the seat body 10, the second rack 250 is engaged with the second gear 232, both the length direction of the first rack 220 and the length direction of the second rack 250 are parallel to the longitudinal direction of the vehicle body 1, the first moving apparatus 210 is configured to drive the first rack 220 to move in the length direction of the first rack 220, to enable the seat body 10 to move toward the vehicle rear 3 under driving by the second rack 250, the locking apparatus 260 is connected to both the base 240 and the seat body 10, and the locking apparatus 260 prevents the seat body 10 from moving toward the vehicle rear 3 in the locked state. When the vehicle encounters a collision or is to encounter a collision, the first moving apparatus 210 drives the first rack 220 to move, so that the gear mechanism 230 drives the second rack 250 and the seat body 10 to move toward the vehicle rear 3, to increase a distance between the driver and the vehicle front 2, to prevent the collision from causing the vehicle front 2 to be deformed toward the cab and get in contact with the driver, and avoid injury to the driver.

In addition, the gear mechanism 230 may enable the moving speed of the second rack 250 to be greater than the moving speed of the first rack 220. When the first moving apparatus 210 drives the first rack 220 to move, the second rack 250 may drive, under speed increase effect of the gear mechanism 230, the seat body 10 to quickly move toward the vehicle rear 3, to prevent the vehicle front 2 from being quickly deformed toward the cab and causing injury to the driver, and improve safety of the vehicle.

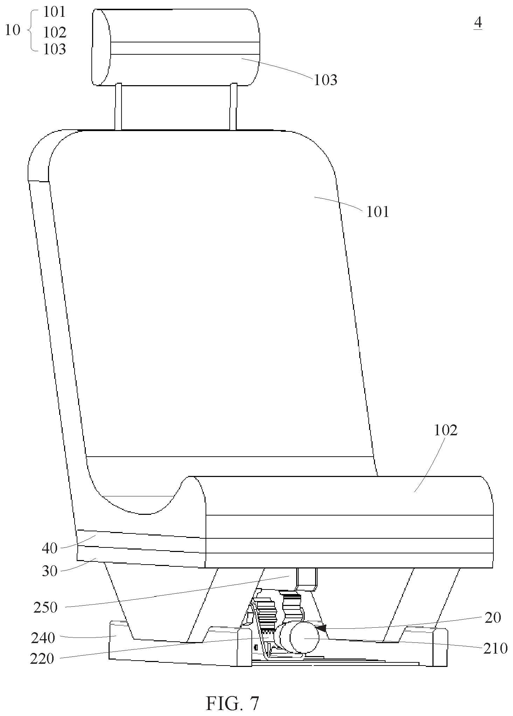

As shown in FIG. 7, in an implementation in which the seat 4 includes the regulation apparatus 30, in some implementations, the seat moving apparatus 20 may be disposed between the regulation apparatus 30 and the vehicle body 1 shown in FIG. 1. Correspondingly, the base 240 is connected to the vehicle body 1, the second rack 250 may be connected to the slide rail of the regulation apparatus 30, and both the first nut and the slide block of the regulation apparatus 30 are connected to the seat cushion 102. That is, the second rack 250 is connected to the seat cushion 102 through the regulation apparatus 30. When the vehicle encounters a collision or is to encounter a collision, the first moving apparatus 210 drives the first rack 220 to move, and the second rack 250 drives, through the regulation apparatus 30, the seat 4 to move toward the vehicle rear 3. When the vehicle is in a traveling or stopped state, the driver may adjust a distance between the seat 4 and the vehicle front 2 by using the regulation apparatus 30, to improve riding comfort. It can be understood that the seat moving apparatus 20 drives the seat to quickly move toward the vehicle rear 3, so that the distance between the seat 4 and the vehicle front 2 can be quickly increased, to prevent the driver from being injured by the deformed vehicle front 2; and the regulation apparatus 30 drives the seat 4 to slowly move in the longitudinal direction of the vehicle body 1, so that the driver can perform adjustment to a proper position.

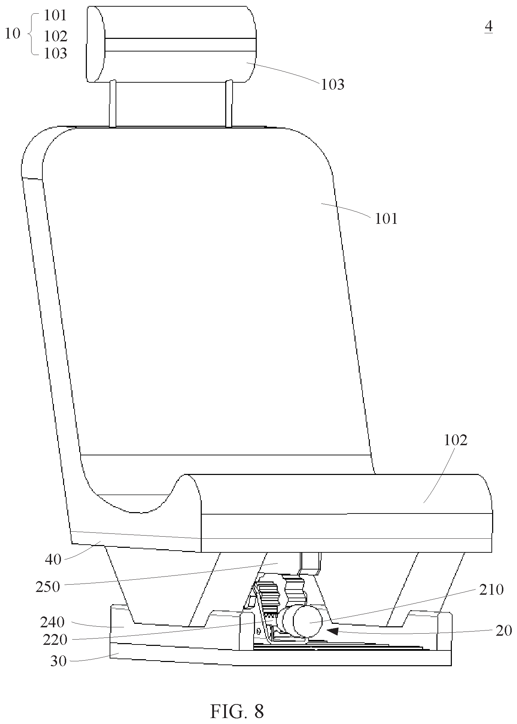

As shown in FIG. 8, in another implementation, the seat 4 includes the regulation apparatus 30, and the regulation apparatus 30 may be disposed between the seat moving apparatus 20 and the vehicle body 1 shown in FIG. 1. Correspondingly, the regulation apparatus 30 may be connected to both the base 240 and the vehicle body 1. For example, both the slide block and the first nut of the regulation apparatus 30 may be connected to the base 240, the slide rail of the regulation apparatus 30 is connected to the vehicle body 1, and the second rack 250 is connected to the seat cushion 102. When the vehicle encounters a collision or is to encounter a collision, the first moving apparatus 210 drives the first rack 220 to move, and the second rack 250 drives the seat 4 to move toward the vehicle rear 3. When the vehicle is in a traveling or stopped state, the regulation apparatus 30 may drive, through the seat moving apparatus 20, the seat 4 to move in the longitudinal direction of the vehicle body 1, to adjust a distance between the seat 4 and the vehicle front 2.

In an implementation in which the seat 4 includes the lifting apparatus 40, the seat moving apparatus 20 may be disposed between the lifting apparatus 40 and the seat cushion 102. For example, both the top of the first connecting rod of the lifting apparatus 40 and the top of the second connecting rod of the lifting apparatus 40 are slidably connected to the base 240, and the second rack 250 is connected to the seat cushion 102. The regulation apparatus 30 may drive, through the lifting apparatus 40 and the seat moving apparatus 20, the seat 4 to move in the longitudinal direction of the vehicle body 1, to adjust the distance between the seat 4 and the vehicle front 2. The lifting apparatus 40 may drive, through the seat moving apparatus 20, the seat 4 to rise or fall, to adjust the height of the seat 4.

Still refer to FIG. 4 and FIG. 5. In this embodiment of this application, the base 240 may include a guide rail 241. The guide rail 241 is parallel to the longitudinal direction of the vehicle body 1 shown in FIG. 1. The locking apparatus 260 matches the guide rail 241, to prevent the seat body 10 from moving toward the vehicle rear 3 in the locked state. In this arrangement, a structure is simple and is conducive to manufacturing. For example, a slide slot 104 may be provided at the bottom of the seat cushion 102, and the guide rail 241 may be slidably disposed in the slide slot 104. Through matching between the guide rail 241 and the slide slot 104, stability of the seat 4 can be improved, to avoid shaking of the seat 4.

In some embodiments, a locking slot 242 is provided on the guide rail 241. The locking slot 242 includes a first slot wall 243 and a second slot wall 244 that are arranged in the longitudinal direction of the vehicle body 1. Both the first slot wall 243 and the second slot wall 244 may tilt relative to the horizontal plane, and the second slot wall 244 is farther away from the vehicle rear 3 than the first slot wall 243. For example, the locking slot 242 may be provided on a top surface of the guide rail 241, the first slot wall 243 and the second slot wall 244 extend in a direction away from the top surface, and one end of the first slot wall 243 and one end of the second slot wall 244 that are away from the top surface may intersect each other. Certainly, the end of the first slot wall 243 and the end of the slot wall that are away from the top surface may alternatively be arranged at a spacing. It can be understood that the locking slot 242 may penetrate the guide rail 241 in a horizontal direction. Certainly, the locking slot 242 may alternatively not penetrate the guide rail 241 in the horizontal direction. This is not limited in this embodiment of this application.

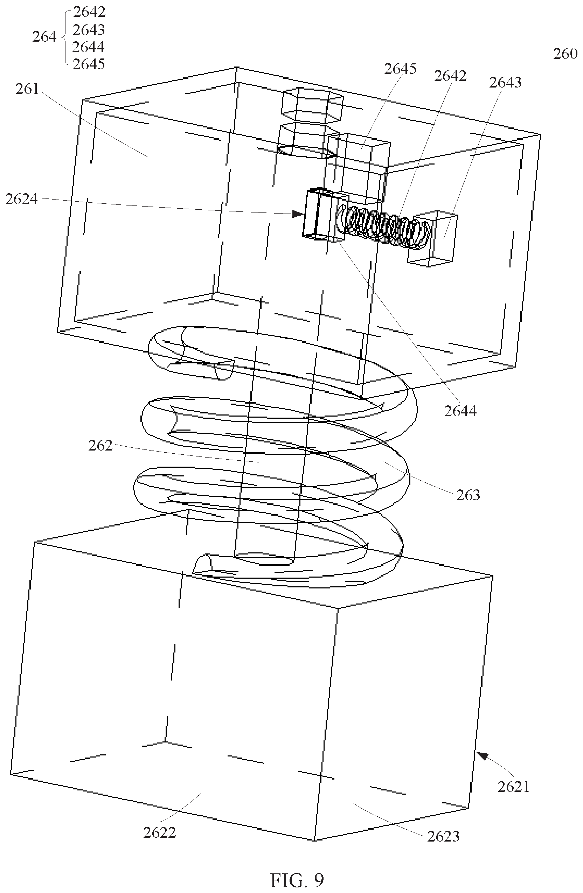

Refer to FIG. 5 and FIG. 9. In the foregoing implementation, the locking apparatus 260 includes a pedestal 261 and a locking rod 262. The pedestal 261 is connected to the seat body 10 shown in FIG. 4. The locking rod 262 is slidably connected to the pedestal 261. A locking block 2621 is disposed at an end (the bottom) of the locking rod 262. For example, a slide hole may be provided on the pedestal 261, and the locking rod 262 passes through the slide hole. The locking apparatus 260 may further include a first elastic member 263. The first elastic member 263 is connected to both the pedestal 261 and the locking block 2621. The first elastic member 263 is configured to enable the locking block 2621 to move toward the locking slot 242, to enable the locking block 2621 to get in contact with the first slot wall 243. The first elastic member 263 may include a first spiral spring. The first spiral spring may be sleeved on the locking rod 262, one end of the first spiral spring abuts against the pedestal 261, and the other end of the first spiral spring abuts against the locking block 2621. Under the action of an elastic force of the first spiral spring, the locking rod 262 is enabled to move toward the guide rail 241, so that the locking block 2621 enters the locking slot 242, and the locking block 2621 gets in contact with the first slot wall 243. Certainly, the first elastic member 263 may alternatively include a first elastic sheet, one end of the first elastic sheet abuts against the pedestal 261, and the other end of the first elastic sheet abuts against the locking block 2621. Under the action of an elastic force of the first elastic sheet, the locking rod 262 is enabled to move toward the guide rail 241. The first elastic member 263 is not limited in this embodiment of this application.

Refer to FIG. 9. In this embodiment of this application, the locking apparatus 260 further includes a position limiting apparatus 264. The position limiting apparatus 264 is disposed on the pedestal 261. The position limiting apparatus 264 is configured to connect to the locking rod 262 in the locked state, to prevent the locking rod 262 from sliding relative to the pedestal 261. To be specific, in the locked state, the locking block 2621 is in contact with the first slot wall 243, and the position limiting apparatus 264 prevents the locking rod 262 from sliding relative to the pedestal 261. In this case, the locking apparatus 260 prevents the seat body 10 from moving toward the vehicle rear 3. In an unlocked state, the position limiting apparatus 264 releases the locking rod 262. When the first moving apparatus 210 shown in FIG. 4 drives the seat body 10 to move toward the vehicle rear 3 shown in FIG. 1, sliding may occur between the first slot wall 243 and the locking block 2621, so that the locking block 2621 slides out of the locking slot 242, and then the seat 4 is allowed to move toward the vehicle rear 3, to unlock the seat body 10.

It can be understood that, in the foregoing implementation, a tilt angle of the first slot wall 243 is less than a friction angle of a contact surface between the locking block 2621 and the first slot wall 243, to avoid latching between the locking block 2621 and the first slot wall 243. In this way, when the first moving apparatus 210 drives the seat body 10 to move toward the vehicle rear 3, sliding may occur between the first slot wall 243 and the locking block 2621, to enable the locking block 2621 to slide out of the locking slot 242.

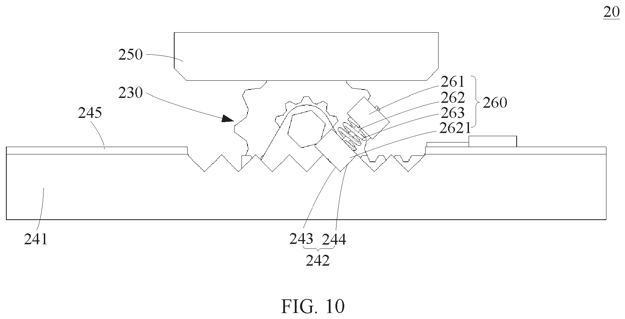

Refer to FIG. 9 and FIG. 10. In some embodiments, the locking block 2621 includes a first surface 2622 and a second surface 2623. In the locked state, the first surface 2622 is in contact with the first slot wall 243, and the second surface 2623 is in contact with the second slot wall 244. A tilt angle of the second slot wall 244 is greater than a friction angle of a contact surface between the second surface 2623 and the second slot wall 244. In this arrangement, latching may occur between the locking block 2621 and the second slot wall 244, and in either the unlocked state or the locked state, the locking apparatus 260 may prevent the seat 4 from moving toward the vehicle front 2 shown in FIG. 1, and may prevent the seat 4 from moving toward the vehicle front 2 when the vehicle travels normally.

In the foregoing implementation, there may be a plurality of locking slots 242, and the plurality of locking slots 242 are arranged in the longitudinal direction of the vehicle body 1. For example, the plurality of locking slots 242 may be sequentially arranged in the longitudinal direction of the vehicle body 1, and the top of a first slot wall 243 of a previous locking slot 242 may be in contact with the top of a second slot wall 244 of a next locking slot 242. Certainly, the plurality of locking slots 242 may alternatively be arranged at spacings in the longitudinal direction of the vehicle body 1. This is not limited in this embodiment of this application. In this arrangement, in the locked state, the locking block 2621 may be located in different locking slots 242, to further adjust the distance between the seat 4 and the vehicle front 2, to increase an adjustment range of the distance between the seat 4 and the vehicle front 2.

It can be understood that, in a process in which the position limiting apparatus 264 releases the locking rod 262, in other words, the locking apparatus 260 is in the unlocked state, and the first moving apparatus 210 drives the seat body 10 to move toward the vehicle rear 3, the locking block 2621 sequentially slides into each locking slot 242 from the vehicle front 2 to the vehicle rear 3 under the action of an elastic force of the first elastic member 263.

In the foregoing implementation, an accommodation cavity may be provided on the pedestal 261, and the position limiting apparatus 264 may be disposed in the accommodation cavity, to prevent the position limiting apparatus 264 from occupying external space, and improve structural compactness of the seat moving apparatus 20.

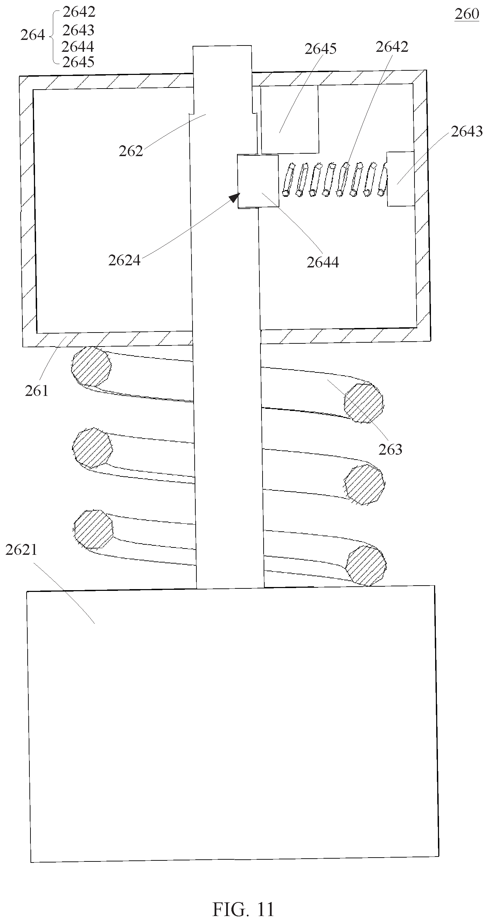

Refer to FIG. 9 and FIG. 11. In some embodiments, the position limiting apparatus 264 includes a position limiting block 2644 and a second elastic member 2642, and a position limiting slot 2624 is provided on the locking rod 262. The second elastic member 2642 is connected to both the position limiting block 2644 and the pedestal 261. The second elastic member 2642 is configured to drive the position limiting block 2644 to move toward the locking rod 262 in an axial direction perpendicular to the locking rod 262, to enable the position limiting block 2644 to be clamped into the position limiting slot 2624 in the locked state. The position limiting apparatus 264 further includes a positioning boss 2645. The positioning boss 2645 abuts against a side, away from the locking block 2621, of the position limiting block 2644, and the positioning boss 2645 is slidably connected to the position limiting block 2644. In the locked state, the second elastic member 2642 drives the position limiting block 2644 to be clamped into the position limiting slot 2624. In this case, the positioning boss 2645 prevents, through the position limiting block 2644, the locking rod 262 from sliding relative to the pedestal 261. The position limiting apparatus 264 further includes a second moving apparatus 2643. The second moving apparatus 2643 is connected to the position limiting block 2644 and the pedestal 261. In the unlocked state, the second moving apparatus 2643 may drive the position limiting block 2644 to move in a direction away from the locking rod 262, so that the position limiting block 2644 slides out of the position limiting slot 2624, to release the locking rod 262. In an implementation, a slide hole may be provided on the pedestal 261, and the position limiting block 2644 may be slidably disposed in the slide hole, to lock the locking rod 262 when the position limiting block 2644 is clamped into the position limiting slot 2624.

In the foregoing arrangement, in the locked state, the second elastic member 2642 may enable the position limiting block 2644 to remain in the position limiting slot 2624, to prevent the locking rod 262 from moving, and implement locking. During unlocking, the second moving apparatus 2643 drives the position limiting block 2644 to move in a direction away from the locking rod 262, so that the position limiting block 2644 slides out of the position limiting slot 2624, to release the locking rod 262 and implement unlocking. This can increase an unlocking speed, so that the seat 4 shown in FIG. 4 can quickly move toward the vehicle rear 3 shown in FIG. 1, to further improve safety of the vehicle.

For example, the second moving apparatus 2643 may include a second electromagnet. The second electromagnet is disposed on the pedestal 261, and an iron core of the second electromagnet is configured to attract the position limiting block 2644, to drive the position limiting block 2644 to move in a direction away from the locking rod 262 when the second electromagnet is energized. Certainly, the second moving apparatus 2643 may alternatively include an electric push rod. The electric push rod is disposed on the pedestal 261, and a push rod of the electric push rod is connected to the position limiting block 2644. During unlocking, the electric push rod drives the position limiting block 2644 to move in a direction away from the locking rod 262. In this embodiment of this application, the second moving apparatus 2643 is not limited, provided that the position limiting block 2644 can be driven to move in a direction away from the locking rod 262 during unlocking, to release the locking rod 262.

It can be understood that, when the second electromagnet is energized, a large magnetic field is generated at the iron core, to generate a magnetic force for attracting the position limiting block 2644, and drive the position limiting block 2644 to move. A material of the position limiting block 2644 may include a ferromagnetic material such as a magnet, iron, or nickel, so that the position limiting block 2644 can be attracted when the second electromagnet generates a magnetic field.

In the foregoing implementation, the second elastic member 2642 may include a second spiral spring. One end of the second spiral spring is connected to the pedestal 261, and the other end of the second spiral spring is connected to the position limiting block 2644. The second spiral spring is in a compressed state. In another implementation, the second elastic member 2642 may alternatively include a second elastic sheet. One end of the second elastic sheet is connected to the pedestal 261, and the other end of the second elastic sheet may be connected to the position limiting block 2644. An elastic force of the second elastic sheet may drive the position limiting block 2644 to move toward the locking rod 262, and keep the position limiting block 2644 in the position limiting slot 2624. In this embodiment of this application, the second elastic member 2642 is not limited, provided that the second elastic member 2642 can drive, through its own elastic force, the position limiting block 2644 to move toward the locking rod 262, and enable the position limiting block 2644 to remain in the position limiting slot 2624.

In another embodiment, the position limiting apparatus 264 includes a position limiting block 2644 and a second elastic member 2642, and a position limiting slot 2624 is provided on the locking rod 262. The second elastic member 2642 is connected to the position limiting block 2644 and the pedestal 261, and the second elastic member 2642 is configured to drive the position limiting block 2644 to move in a direction away from the locking rod 262. The position limiting apparatus 264 further includes a second moving apparatus 2643. The second moving apparatus 2643 is disposed on the pedestal 261. The second moving apparatus 2643 is connected to the position limiting block 2644. The second moving apparatus 2643 is configured to: in the locked state, drive the position limiting block 2644 to move toward the locking rod 262, to enable the position limiting block 2644 to be clamped into the position limiting slot 2624 in the locked state.

In the foregoing arrangement, in the locked state, the second moving apparatus 2643 drives the position limiting block 2644 to move toward the locking rod 262, to enable the position limiting block 2644 to remain in the position limiting slot 2624, and prevent the locking rod 262 from moving. A driving force for driving the position limiting block 2644 to move toward the locking rod 262 is large, to avoid mis-unlocking caused by detachment of the position limiting block 2644 from the position limiting slot 2624. Correspondingly, in the unlocked state, the second moving apparatus 2643 may release the driving force for the position limiting block 2644. At the same time, the second elastic member 2642 drives, through its own elastic force, the position limiting block 2644 to move in a direction away from the locking rod 262, and the position limiting block 2644 slides out of the position limiting slot 2624, to release the locking rod 262 and implement unlocking.

For example, the second moving apparatus 2643 may include a second electromagnet. The second electromagnet is disposed on the pedestal 261, and an iron core of the second electromagnet is configured to attract the position limiting block 2644, to drive the position limiting block 2644 to move toward the locking rod 262 when the second electromagnet is energized, to implement locking. Certainly, the second moving apparatus 2643 may alternatively include an electric push rod. The electric push rod is disposed on the pedestal 261, and a push rod of the electric push rod is connected to the position limiting block 2644. During locking, the electric push rod drives the position limiting block 2644 to move toward the locking rod 262. In this embodiment of this application, the second moving apparatus 2643 is not limited, provided that the position limiting block 2644 can be driven to move toward the locking rod 262 during locking and then the position limiting block 2644 is enabled to remain in the position limiting slot 2624. It can be understood that, in the locked state, the second moving apparatus 2643 may remain energized; and during unlocking, the second moving apparatus 2643 is not energized, the position limiting block 2644 is driven, under the action of the elastic force of the second elastic member 2642, to move in a direction away from the locking rod 262, and the position limiting block 2644 slides out of the position limiting slot 2624, to release the locking rod 262.

It can be understood that, when the second electromagnet is energized, a large magnetic field is generated at the iron core, to generate a magnetic force for attracting the position limiting block 2644, and drive the position limiting block 2644 to move. A material of the position limiting block 2644 may include a ferromagnetic material such as a magnet, iron, or nickel, so that the position limiting block 2644 can be attracted when the second electromagnet generates a magnetic field.

In the foregoing implementation, the second elastic member 2642 may include a second spiral spring. One end of the second spiral spring is connected to the pedestal 261, and the other end of the second spiral spring may be connected to the position limiting block 2644. In the locked state, the second spiral spring is in a stretched state. In another implementation, the second elastic member 2642 may alternatively include a second elastic sheet. One end of the second elastic sheet is connected to the pedestal 261, and the other end of the second elastic sheet may be connected to the position limiting block 2644. An elastic force of the second elastic sheet may drive the position limiting block 2644 to move in a direction away from the locking rod 262. In this embodiment of this application, the second elastic member 2642 is not limited, provided that the second elastic member 2642 can drive, through its own elastic force, the position limiting block 2644 to move in a direction away from the locking rod 262, and enable the position limiting block 2644 to slide out of the position limiting slot 2624.

Still refer to FIG. 5 and FIG. 6. In the foregoing embodiment, the locking slot 242 is provided on a preset surface of the guide rail 241, and a first stop part 245 is disposed on the preset surface. The first stop part 245 is located on a side, facing the vehicle rear 3 shown in FIG. 1, of the locking slot 242. The first stop part 245 is configured to prevent the locking block 2621 from moving toward the vehicle rear 3. In this arrangement, the seat 4 shown in FIG. 4 may be prevented from moving by an excessively long distance toward the vehicle rear 3, to avoid separation of the seat 4 from the guide rail 241.

It can be understood that, in an implementation in which the locking slot 242 is provided on a top surface of the guide rail 241, the preset surface is the top surface of the guide rail 241. The first stop part 245 may include a protrusion located on the top surface. There is a specific distance between the protrusion and the top surface, to ensure that after the locking block 2621 gets in contact with the first stop part 245, it is difficult for the locking block 2621 to cross the first stop part 245 even if the locking block 2621 moves to a limiting position in a direction away from the guide rail 241. For example, the protrusion and the guide rail 241 may be of an integrated structure, to reduce difficulty in manufacturing. Certainly, the protrusion may alternatively be connected to the guide rail 241 through welding, a bolt connection, or the like. A manner of connecting the protrusion to the guide rail 241 is not limited in this embodiment of this application.

In the foregoing embodiment, an accommodation slot is provided at a slot bottom of the slide slot 104 shown in FIG. 4, and the locking apparatus 260 may be disposed in the accommodation slot. In this arrangement, structural compactness of the seat 4 can be improved, to avoid occupying space in the cab.

Still refer to FIG. 4 and FIG. 5. In some embodiments, there may be two guide rails 241. The two guide rails 241 are disposed in parallel at a spacing, and the two guide rails 241 are located on a same horizontal plane. Correspondingly, two slide slots 104 may be provided on the seat cushion 102, and each guide rail 241 is disposed in one slide slot 104, to further improve stability of the seat 4. For example, a locking slot 242 is provided on a top surface of each guide rail 241. Correspondingly, an accommodation slot 105 is provided at a slot bottom of each slide slot 104, and a locking apparatus 260 is disposed in each accommodation slot 105. In this arrangement, two locking apparatuses 260 can further improve stability of the seat 4.

In the foregoing implementation, a connecting panel 247 is disposed between the two guide rails 241, and the connecting panel 247 is connected to both of the two guide rails 241. Both the mount bracket 246 and the first moving apparatus 210 may be disposed on the connecting panel 247.

In some embodiments, a locking hole may be provided on the guide rail 241, a center line of the locking hole is perpendicular to a length direction of the guide rail 241, and the center line of the locking hole is parallel to the horizontal plane. Correspondingly, the locking apparatus 260 may include a locking rod and a third electromagnet. The locking rod is slidably disposed on the seat cushion 102, the third electromagnet is disposed on the seat cushion 102, and an iron core of the third electromagnet is configured to attract the locking rod. In the locked state, the locking rod passes through the locking hole, to prevent the seat 4 from moving relative to the base 240 in the longitudinal direction of the vehicle body 1. In the unlocked state, the electromagnet is energized, to drive the locking rod to retract from the locking hole, so that the seat 4 can move toward the vehicle rear 3 under driving by the first moving apparatus 210, to increase the distance between the seat 4 and the vehicle front 2.

In this embodiment of this application, a thrust for driving the seat body 10 to move toward the vehicle rear 3 satisfies the following formula:

$$F_0 = amg + (bg + 0.8g)m,$$

where
$F_0$ is the thrust for driving the seat body 10 to move toward the vehicle rear 3, $m$ is total mass of the seat body 10 and the driver, $g$ is a gravity acceleration, $a$ is a friction coefficient between the guide rail 241 and the slide slot 104, $b$ is a maximum braking deceleration, and $0.8g$ is an acceleration during backward movement of the seat 4.

For example, the total mass m of the seat body 10 and the driver is approximately 100 kg (where the driver is approximately 75 kg, and the seat body 10 is approximately 25 kg). The friction coefficient between the guide rail 241 and the slide slot 104 ranges from 0.01 to 0.02. Due to an actual mounting error or other factors, the friction coefficient is much greater than a theoretical value. Herein, the friction coefficient $a$ may be 0.2. During braking of the vehicle, a longitudinal force of the vehicle is less than a maximum friction force of a road surface. Therefore, a maximum braking deceleration determined based on an attachment coefficient (approximately 0.8) of a high-attachment road surface is 0.8g. Through calculation, $F_0$ = 1764$N$. Because both the acceleration during backward movement of the seat 4 and the maximum braking deceleration are upper limit values, the calculated $F_0$ is sufficiently large to drive the seat 4 to quickly move toward the vehicle rear 3.

In an implementation in which the first moving apparatus 210 includes the first electromagnet, a magnetic force in a case in which the first electromagnet is energized satisfies the following formula:

$$F_E = [(NI)^2 \mu_0 S]/(2\sigma^2),$$

where
$F_E$ is the magnetic force in the case in which the first electromagnet is energized, $N$ is a quantity of turns of a coil of the first electromagnet, $I$ is a current of the first electromagnet, and $\mu_0$ is magnetic permeability of the first electromagnet, and may be as follows: $\mu_0 = 4\pi 10^{-7}$, where $\pi$ is pi, $S$ is a cross-sectional area of a magnetic circuit, and $\sigma$ is an air gap stroke.

It can be learned from a force balance that $F_0 i = F_E$, namely, $F_0 i = [(NI)^2 \mu_0 S]/(2\sigma^2)$, where $i$ is a transmission ratio of the gear mechanism 230. For example, the first gear 231 and the second gear 232 are of an integrated structure, a transmission ratio of a two-stage speed increase mechanism including the first gear 231 and the second gear 232 is 5, and a distance by which the seat 4 moves toward the vehicle rear 3 is as follows: $L$ = 0.1m. $\sigma = L/i$ = 0.02m. It is assumed that a radius of the first electromagnet is as follows: $R$ = 0.07m. Correspondingly, the cross-sectional area of the magnetic circuit is as follows: $S = \pi R^2 = 0.0154m^2$. The foregoing values are substituted into $F_0 i = [(NI)^2 \mu_0 S]/(2\sigma^2)$. It can be learned through calculation that $NI$ = 19099. When $I$ = 20A, $N$ = 955 turns.

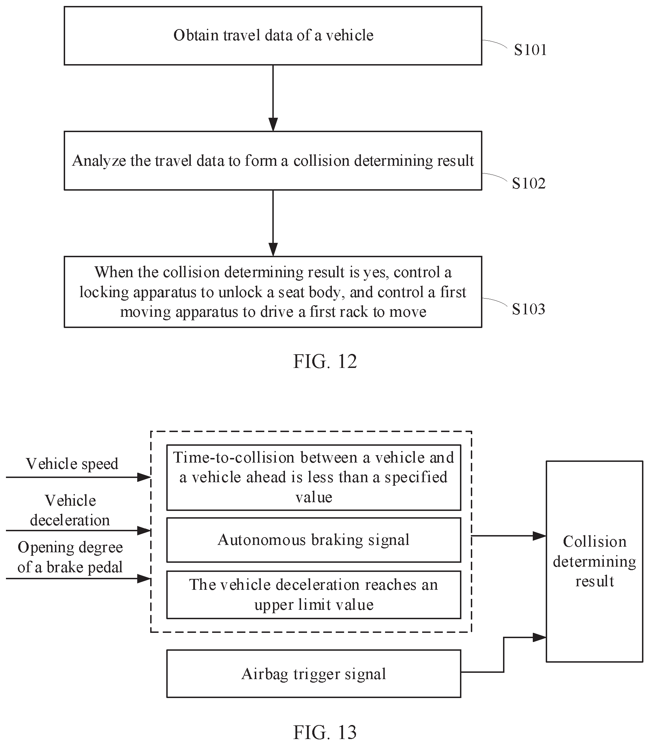

Refer to FIG. 12. An embodiment of this application further provides a control method for a seat moving apparatus. The method may be applied to the seat moving apparatus in the foregoing embodiments. The method includes the following steps.

S101: Obtain travel data of a vehicle.

For example, obtaining the travel data of the vehicle includes: a current vehicle speed, a vehicle deceleration, an opening degree of a brake pedal, a vehicle distance, and the like. Correspondingly, a vehicle-mounted computer (ECU) may obtain the travel data of the vehicle through a detection device disposed on the vehicle. For example, the detection device may include a lidar, a millimeter-wave radar, or a camera (for example, a front-facing camera) disposed on the vehicle, to obtain the travel data such as the current vehicle speed, the vehicle deceleration, and the vehicle distance. The detection device may alternatively include a device that can detect the opening degree of the brake pedal, to detect the opening degree of the brake pedal, in other words, obtain braking force data. Certainly, the vehicle-mounted computer may alternatively obtain the opening degree of the brake pedal through a controller area network (Controller Area Network, CAN for short) bus of the vehicle, to obtain braking force data.

In the foregoing implementation, the travel data is obtained by an existing detection device, for example, a sensor, a radar, or a camera, of the vehicle, and no additional detection device needs to be disposed to detect the travel data. This simplifies a structure of the vehicle and also reduces manufacturing costs of the vehicle.

After the travel data of the vehicle is obtained, the method further includes the following step.

S102: Analyze the travel data to form a collision determining result.

Refer to FIG. 13. Analyzing the travel data to obtain the collision determining result includes: obtaining time-to-collision (Time-To-Collision, TTC for short) between the vehicle and a vehicle ahead, an operating status (for example, an autonomous braking signal) of an autonomous emergency braking (Autonomous Emergency Braking, AEB for short) system, and the vehicle deceleration based on the travel data; and when the time-to-collision is less than a specified value, the autonomous emergency braking system is operating, and the vehicle deceleration reaches an upper limit value, the collision determining result is yes, to be specific, it is determined that the vehicle is to encounter a collision; or when the time-to-collision is greater than or equal to a specified value, and/or the autonomous emergency braking system is operating or is not operating, and/or the vehicle deceleration does not reach an upper limit value, determining that the collision determining result is no, to be specific, the vehicle is not to encounter a collision.

In the foregoing arrangement, whether the vehicle is to encounter a collision is comprehensively determined based on the time-to-collision, an emergency braking status, and the vehicle deceleration, to improve accuracy of determining and improve safety of the vehicle.

It can be understood that the specified value and the upper limit value may be properly set based on an actual case of use, to ensure that a determining result has high accuracy.

After the collision determining result is formed, the method further includes the following step.

S103: When the collision determining result is yes, control a locking apparatus to unlock a seat body, and control a first moving apparatus to drive a first rack to move.

As shown in FIG. 4 and FIG. 5, in an implementation in which the first moving apparatus 210 includes a first electromagnet and a second moving apparatus 2643 in the locking apparatus 260 includes a second electromagnet, when the collision determining result is yes, the vehicle-mounted computer sends an enable signal, to supply power to the first electromagnet and the second electromagnet, so that the locking apparatus 260 unlocks the seat body 10. In addition, the first electromagnet drives, through the first rack 220, a gear mechanism 230, and a second rack 250, the seat body 10 to move toward a vehicle rear 3, to increase a distance between a seat 4 and a vehicle front 2, and prevent a driver from being injured by the deformed vehicle front 2.

In some embodiments, as shown in FIG. 13, the control method for a seat moving apparatus further includes: receiving an airbag trigger signal, and when the airbag trigger signal is obtained, controlling the locking apparatus 260 (as shown in FIG. 4 and FIG. 5) to unlock the seat body 10, and controlling the first moving apparatus 210 to drive the first rack 220 to move. To be specific, when an airbag expands, the vehicle-mounted computer controls the locking apparatus 260 to unlock the seat body 10, and controls the first moving apparatus 210 to drive the seat body 10 to move toward the vehicle rear 3, to avoid injury to the driver and further improve safety of the vehicle.

It can be understood that, even if the time-to-collision is greater than or equal to the first specified value, and/or the autonomous emergency braking system is operating or is not operating, and/or the vehicle deceleration does not reach the upper limit value, if the vehicle-mounted host obtains the airbag trigger signal and determines that the collision determining result is yes, the vehicle-mounted host immediately controls the locking apparatus 260 to unlock the seat body 10, and controls the first moving apparatus 210 to drive the seat 4 to move toward the vehicle rear 3.

In the control method for a seat moving apparatus provided in this embodiment of this application, the travel data is analyzed to form the collision determining result; and when the collision determining result is yes, the locking apparatus is controlled to unlock the seat body, and the first moving apparatus 210 is controlled to drive the first rack 220 to move. To be specific, when the vehicle encounters a collision or is to encounter a collision, the first moving apparatus 210 drives the first rack 220 to move, so that the gear mechanism 230 drives the second rack 250 and the seat body 10 to move toward the vehicle rear 3, to increase a distance between the driver and the vehicle front 2, to prevent the collision from causing the vehicle front to be deformed toward a cab and get in contact with the driver, and avoid injury to the driver.

In the descriptions of this specification, specific features, structures, materials, or characteristics may be combined in a proper manner in any one or more of embodiments or examples.

Finally, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application.

**Claims**

1. A seat moving apparatus, comprising:

   a base, wherein the base is configured to connect to a vehicle body;
   a gear mechanism, wherein the gear mechanism comprises a first gear and a second gear that are connected in a transmission manner, and both the first gear and the second gear are rotatably connected to the base;
   a first moving apparatus and a first rack connected to the first moving apparatus, wherein the first moving apparatus is connected to the base, and the first rack is engaged with the first gear;
   a second rack, wherein the second rack is configured to connect to a seat body, the second rack is engaged with the second gear, both a length direction of the first rack and a length direction of the second rack are parallel to a longitudinal direction of the vehicle body, the first moving apparatus is configured to drive the first rack to move in the length direction of the first rack, to enable the seat body to move in the longitudinal direction of the vehicle body, and the gear mechanism is configured to enable a moving speed of the second rack to be greater than a moving speed of the first rack; and
   a locking apparatus, wherein the locking apparatus is connected to the base and the seat body, and the locking apparatus is configured to prevent the seat body from moving in a locked state.

2. The seat moving apparatus according to claim 1, wherein a quantity of teeth of the first gear is less than a quantity of teeth of the second gear.

3. The seat moving apparatus according to claim 1 or 2, wherein the first gear and the second gear have equal angular velocities.

4. The seat moving apparatus according to any one of claims 1 to 3, wherein the first gear and the second gear are of an integrated structure.

5. The seat moving apparatus according to any one of claims 1 to 4, wherein the first moving apparatus comprises a first electromagnet, and an iron core of the first electromagnet is configured to attract the first rack.

6. The seat moving apparatus according to any one of claims 1 to 5, wherein the base comprises a guide rail, the guide rail is parallel to the longitudinal direction of the vehicle body, and the guide rail is configured to cooperate with the locking apparatus to prevent the seat body from moving in the locked state.

7. The seat moving apparatus according to claim 6, wherein a locking slot is provided on the guide rail, the locking slot comprises a first slot wall and a second slot wall that are arranged in the longitudinal direction of the vehicle body, and the second slot wall is farther away from a vehicle rear than the first slot wall in the longitudinal direction of the vehicle body; and
   the locking apparatus comprises:

   a pedestal, wherein the pedestal is configured to connect to the seat body;
   a locking rod, wherein the locking rod is slidably connected to the pedestal, and a locking block is disposed at an end of the locking rod;
   a first elastic member, wherein the first elastic member is connected to both the pedestal and the locking block, the first elastic member is configured to enable the locking block to move toward the locking slot, to enable the locking block to get in contact with the first slot wall, and a tilt angle of the first slot wall is less than a friction angle of a contact surface between the locking block and the first slot wall; and
   a position limiting apparatus, wherein the position limiting apparatus is disposed on the pedestal, and the position limiting apparatus is configured to connect to the locking rod in the locked state, to prevent the locking rod from sliding relative to the pedestal.

8. The seat moving apparatus according to claim 7, wherein the locking block comprises a first surface and a second surface; in the locked state, the first surface is in contact with the first slot wall, and the second surface is in contact with the second slot wall; and a tilt angle of the second slot wall is greater than a friction angle of a contact surface between the second surface and the second slot wall.

9. The seat moving apparatus according to claim 7 or 8, wherein there are a plurality of locking slots, and the plurality of locking slots are arranged in the longitudinal direction of the vehicle body.

10. The seat moving apparatus according to any one of claims 7 to 9, wherein the position limiting apparatus comprises:

   a position limiting block;
   a second elastic member, wherein the second elastic member is connected to the position limiting block and the pedestal, and the second elastic member is configured to drive the position limiting block to move toward the locking rod, to enable the position limiting block to be clamped into a position limiting slot on the locking rod in the locked state; and
   a second moving apparatus, wherein the second moving apparatus is disposed on the pedestal, the second moving apparatus is connected to the position limiting block, and the second moving apparatus is configured to: when the locked state is released, drive the position limiting block to move in a direction away from the locking rod.

11. The seat moving apparatus according to any one of claims 7 to 9, wherein the position limiting apparatus comprises:

   a position limiting block;
   a second elastic member, wherein the second elastic member is connected to the position limiting block and the pedestal, and the second elastic member is configured to drive the position limiting block to move in a direction away from the locking rod; and
   a second moving apparatus, wherein the second moving apparatus is connected to the position limiting block, and the second moving apparatus is configured to: in the locked state, drive the position limiting block to move toward the locking rod, to enable the position limiting block to be clamped into a position limiting slot on the locking rod in the locked state.

12. The seat moving apparatus according to claim 10 or 11, wherein the second moving apparatus comprises a second electromagnet, and an iron core of the second electromagnet is configured to attract the position limiting block.

13. The seat moving apparatus according to any one of claims 7 to 12, wherein the locking slot is provided on a preset surface of the guide rail, a first stop part is disposed on the preset surface, the first stop part is located on one side of the locking slot, and the first stop part is configured to prevent the locking block from moving.

14. A control method for a seat moving apparatus, applied to the seat moving apparatus according to any one of claims 1 to 12, wherein the control method for a seat moving apparatus comprises:

   obtaining travel data of a vehicle;
   analyzing the travel data to form a collision determining result; and
   when the collision determining result is yes, controlling the locking apparatus to unlock the seat body, and controlling the first moving apparatus to drive the first rack to move.

15. The control method for a seat moving apparatus according to claim 14, wherein
analyzing the travel data to obtain the collision determining result comprises: obtaining time-to-collision of the vehicle, an operating status of an autonomous emergency braking system, and a vehicle deceleration based on the travel data; and when the time-to-collision is less than a specified value, the autonomous emergency braking system is operating, and the vehicle deceleration reaches an upper limit value, the collision determining result is yes.

16. The control method for a seat moving apparatus according to claim 15, wherein obtaining the travel data of the vehicle comprises: a current vehicle speed, the vehicle deceleration, an opening degree of a brake pedal, and a vehicle distance.

17. The control method for a seat moving apparatus according to any one of claims 14 to 16, wherein the control method for a seat moving apparatus further comprises: receiving an airbag trigger signal, and when the airbag trigger signal is obtained, controlling the locking apparatus to unlock the seat body, and controlling the first moving apparatus to drive the first rack to move.

18. A seat, comprising a seat body and the seat moving apparatus according to any one of claims 1 to 12, wherein the seat body is connected to the seat moving apparatus.

19. The seat according to claim 18, wherein the seat body comprises a seat cushion and a seat back connected to the seat cushion, and the seat moving apparatus is connected to the seat cushion.

20. The seat according to claim 19, wherein the seat further comprises a regulation apparatus, the regulation apparatus is connected to the base and the vehicle body, and the regulation apparatus is configured to drive the seat cushion to move in the longitudinal direction of the vehicle body; or

the second rack is connected to the seat cushion through the regulation apparatus, and the regulation apparatus is configured to drive the seat cushion to move in the longitudinal direction of the vehicle body.

21. A vehicle, comprising a vehicle body and the seat according to any one of claims 18 to 20, wherein the seat is disposed on the vehicle body.

FIG. 1

10 { 101
102
103

4

101

103

101

102

40

30

FIG. 2

FIG. 3

FIG. 4

FIG. 5

FIG. 6

FIG. 7

FIG. 8

FIG. 9

20

250

261
262
263
2621
260

230

245

241

243 244
242

FIG. 10

FIG. 11

FIG. 12

FIG. 13

## INTERNATIONAL SEARCH REPORT

| International application No. |
| --- |
| **PCT/CN2023/121771** |

### A. CLASSIFICATION OF SUBJECT MATTER

B60N2/427(2006.01)i

According to International Patent Classification (IPC) or to both national classification and IPC

### B. FIELDS SEARCHED

Minimum documentation searched (classification system followed by classification symbols)

IPC: B60N 2/-; B60R 21/0136

Documentation searched other than minimum documentation to the extent that such documents are included in the fields searched

Electronic data base consulted during the international search (name of data base and, where practicable, search terms used)

CNTXT: ENTXT; DWPI; CJFD: 汽车, 座椅, 齿轮, 齿条, 锁, 电磁, car, automobile, chair, seat, gear?, wheel?, rack, lock+, electromagnet, magnetic+

### C. DOCUMENTS CONSIDERED TO BE RELEVANT

| Category* | Citation of document, with indication, where appropriate, of the relevant passages | Relevant to claim No. |
| --- | --- | --- |
| Y | CN 102381218 A (CHONGQING JINGANG QINGHONG TECHNOLOGY CO., LTD.) 21 March 2012 (2012-03-21) description, paragraphs 19-25, and figures 1-13 | 1-6, 14-21 |
| Y | CN 2552760 Y (SUN TIANXIANG) 28 May 2003 (2003-05-28) description, page 2, line 12-page 3, line 17, and figures 1-4 | 1-6, 14-21 |
| A | CN 106828222 A (NINGBO UNIVERSITY OF TECHNOLOGY) 13 June 2017 (2017-06-13) entire document | 1-21 |
| A | US 2023158924 A1 (BROSE FAHRZEUGTEILE SE & CO. KG, COBURG et al.) 25 May 2023 (2023-05-25) entire document | 1-21 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 October 2023** | **24 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/121771**

| Patent document cited in search report | | | Publication date (day/month/year) | Patent family member(s) | Publication date (day/month/year) |
|---|---|---|---|---|---|
| CN | 102381218 | A | 21 March 2012 | None | |
| CN | 2552760 | Y | 28 May 2003 | None | |
| CN | 106828222 | A | 13 June 2017 | None | |
| US | 2023158924 | A1 | 25 May 2023 | None | |

Form PCT/ISA/210 (patent family annex) (July 2022)